# EUROPÄISCHE PATENTSCHRIFT

(11) **EP 3 709 857 B1**
(45) Veröffentlichungstag und Bekanntmachung des Hinweises auf die Patenterteilung: **03.07.2024**
(21) Anmeldenummer: 18822267.3
(22) Anmeldetag: 08.11.2018
(51) Int. Cl.: A47L 13/51

(54) **REINIGUNGSVERFAHREN**
METHOD FOR CLEANING
METHODE POUR NETTOYAGE

(30) Priorität: 13.11.2017 DE 102017010461
(43) Veröffentlichungstag der Anmeldung: 23.09.2020
(73) Patentinhaber: Carl Freudenberg KG, 69469 Weinheim (DE)
(72) Erfinder: DEERBERG, Jens, 45133 Essen (DE); GRATZKI, Torsten, 45219 Essen (DE); BARBER, Steve, Didsbury Manchester M20 2UY (GB); JÜRGENS, Ralf, 69514 Laudenbach (DE); FALLENSTEIN, Felix, 67346 Speyer (DE); SAND, Nikolai, 67346 Speyer (DE); EISENHUT, Andreas, 82049 Pullach (DE)
(86) Internationale Anmeldenummer: PCT/EP2018/080538
(87) Internationale Veröffentlichungsnummer: WO 2019/092062

(56) Entgegenhaltungen:
- ES-U- 1 076 358
- US-A1- 2007 267 832
- US-A1- 2009 212 518

## Beschreibung

### Technisches Gebiet

Die Erfindung betrifft einen Reinigungsfahrwagen und einen Rahmen dafür. Der Reinigungsfahrwagen umfasst einen Tragkörper und eine Kommunikationsgerät-Halterung zur Aufnahme eines mobilen Kommunikationsgeräts, wobei die Kommunikationsgeräte-Halterung am Tragkörper festgelegt ist, wobei der Tragkörper zweischalig ausgebildet ist, umfassend eine äußere erste Schale und eine innere zweite Schale, wobei die erste Schale die zweite Schale im Wesentlichen kuppelförmig überdeckt, wobei die erste Schale und die zweite Schale einen Zwischenraum begrenzen, wobei die Kommunikationsgeräte-Halterung im Zwischenraum angeordnet ist und wobei die erste und die zweite Schale zur Öffnung des Zwischenraums mittels eines Gelenks voneinander wegklappbar sind.

### Stand der Technik

Ein Reinigungsfahrwagen ist allgemein bekannt und gelangt beispielsweise zur professionellen Gebäudereinigung zur Anwendung, wobei alle Reinigungsutensilien, die für die Reinigung benötigt werden, im oder am Reinigungsfahrwagen aufgenommen sind.

Üblicherweise können das zum Beispiel Reinigungsgeräte, Reinigungstücher und/oder Reinigungsmittel sein.

Ein Reinigungsfahrwagen hat den Vorteil, dass auch eine Vielzahl von Reinigungsutensilien vom Benutzer kräfteschonend und bequem transportiert werden kann.

Das Reinigen selbst und der Einsatz des Reinigungsfahrwagens erfolgen bisher ausschließlich analog. Der Benutzer des Reinigungsfahrwagens arbeitet dabei auf sich alleine gestellt statisch seine Reinigungspläne ab.

Dabei ist jedoch zu beachten, dass eine digitale Kommunikation, zum Beispiel zwischen einer Reinigungszentrale und dem Reinigungsfahrwagen und/oder dem Benutzer, nicht erfolgen kann. Auch das bedarfsweise rasche Einholen von Informationen aus dem Internet, zum Beispiel zur Beantwortung unvorhergesehen auftretender Fragen, die den Arbeitsalltag des Benutzers betreffen, ist bisher vom Reinigungsfahrwagen funktionstechnisch entkoppelt.

Aus der US 2007/267832 A1 ist ein Reinigungsfahrwagen bekannt, der einen Behälter umfasst, der durch einen Deckel verschließbar ist. Der Deckel umfasst auf seiner Oberseite eine Klarsichthülle, in der zum Beispiel Arbeitspläne oder andere wichtige Informationen für den Benutzer des Reinigungsfahrwagens angeordnet sind. Der Deckel ist von einem schützenden Rahmen umgeben.

Aus der US 2009/0212518 A1 ist ein Fahrwagen für medizinische Anwendungen bekannt, der eine Halterung für Kommunikationsgeräte umfasst.

### Darstellung der Erfindung

Der Erfindung liegt die Aufgabe zugrunde, einen Reinigungsfahrwagen der eingangs genannten Art derart weiterzuentwickeln, dass die Arbeit des Benutzers durch eine Digitalisierung des Reinigungsfahrwagens erleichtert wird.

Diese Aufgabe wird erfindungsgemäß mit den Merkmalen von Anspruch 1 und Anspruch 32 gelöst. Auf vorteilhafte Ausgestaltungen nehmen die Unteransprüche Bezug.

Zur Lösung der Aufgabe ist ein Reinigungsfahrwagen vorgesehen, wie eingangs beschrieben, wobei der Tragkörper als Deckel für einen nach oben offenen Behälter ausgebildet ist, die erste Schale als äußerer Deckel und die zweite Schale als innerer Deckel.

Dadurch ist von Vorteil, dass der Reinigungsfahrwagen einfach und schnell mit einem mobilen Kommunikationsgerät, beispielsweise einem Tablet-Computer oder einem Smartphone, ausgerüstet und dadurch digitalisiert werden kann. Durch das mobile Kommunikationsgerät ist der Reinigungsfahrwagen stets online und der Benutzer des Reinigungsfahrwagens stets weltweit kommunikationsfähig. Sei es dadurch, dass er Mitteilungen an eine Reinigungszentrale verschickt, Mitteilungen von einer Reinigungszentrale erhält und/oder mit dem Internet verbunden ist, um zum Beispiel Reinigungsutensilien bedarfsweise direkt nachbestellen oder spezielle Reinigungsanleitungen direkt aus dem Internet abrufen zu können.

Auf dem mobilen Kommunikationsgerät sind dazu geeignete Apps installiert.

Durch die Digitalisierung des Reinigungsfahrwagens mittels des in der Kommunikationsgeräte-Halterung aufgenommenen mobilen Kommunikationsgeräts kann zum Beispiel verhindert werden, dass Gebäudeteile versehentlich gereinigt werden, die zum Beispiel gar nicht verunreinigt sind. Auch besteht durch die Digitalisierung des Reinigungsfahrwagens die Möglichkeit, mitzuteilen, wo sich der Reinigungsfahrwagen aktuell befindet.

Der Benutzer kann zum Beispiel in Echtzeit mit einer Reinigungszentrale kommunizieren, beispielsweise wenn Reinigungsutensilien ausgehen oder ein Reinigungsgerät repariert werden muss.

Reinigungsfahrwagen und Benutzer können automatisiert und gezielt dorthin geschickt werden, wo deren Einsatz notwendig ist.

Der Tragkörper ist zweischalig ausgebildet, umfassend eine äußere erste Schale und eine innere zweite Schale, wobei die erste Schale die zweite Schale im Wesentlichen kuppelförmig überdeckt, wobei die erste Schale und die zweite Schale einen Zwischenraum begrenzen, wobei die Kommunikationsgeräte-Halterung im Zwischenraum angeordnet ist und wobei die erste und die zweite Schale zur Öffnung des Zwischenraums mittels eines Gelenks voneinander wegklappbar sind. Durch die Anordnung der Kommunikationsgeräte-Halterung im Zwischenraum ist das von der Kommunikationsgeräte-Halterung gehaltene mobile Kommunikationsgerät vor äußeren Einflüssen gut geschützt. Der Zwischenraum und das darin befindliche mobile Kommunikationsgerät sind vor einer Beaufschlagung mit Verunreinigungen und/oder Feuchtigkeit ebenso geschützt, wie vor unerlaubtem Zugriff. Dazu kann es zum Beispiel vorgesehen sein, dass der Zwischenraum gegenüber der Umgebung abgedichtet ist und/oder durch zumindest ein Schloss verriegelbar ist.

Der Tragkörper ist als Deckel für einen nach oben offenen Behälter, die erste Schale als äußerer Deckel und die zweite Schale als innerer Deckel ausgebildet. Die Kommunikationsgeräte-Halterung bildet dadurch einen integralen Bestandteil des Deckels und damit des Reinigungsfahrwagens.

Wie nachfolgend näher beschrieben wird, kann der äußere Deckel zusammen mit dem inneren Deckel in Offen-Stellung gebracht werden, um die Öffnung des Behälters freizugeben.

Durch die gelenkige Verbindung von äußerem und innerem Deckel kann außerdem der Zwischenraum geöffnet werden, um die Kommunikationsgeräte-Halterung mit dem Kommunikationsgerät zugänglich zu machen.

Der Deckel kann mittels eines Feder-Dämpfer-Systems bedarfsweise in Offen- oder Geschlossen-Stellung bringbar sein. Hierbei ist von Vorteil, dass das Feder-Dämpfer-System die Handhabung des Reinigungsfahrwagens erheblich vereinfacht. Der Deckel kann durch das Feder-Dämpfer-System im Wesentlichen selbsttätig in Offen- oder Geschlossen-Stellung bewegt werden.

Das Feder-Dämpfer-System kann eine Endlagendämpfung umfassen. Hierbei ist von Vorteil, dass der Deckel gedämpft in seine Endlage fährt. Unerwünschte Geräusche oder Erschütterungen, die zu einer Beschädigung des Reinigungsfahrwagens führen könnten, werden dadurch verhindert.

Gemäß einer vorteilhaften Ausgestaltung kann es vorgesehen sein, dass die Endlagendämpfung ab einem ersten Öffnungswinkel des Deckels ≥ 45° einsetzt. Dadurch fährt der Deckel beim Öffnen vom Einsetzen der Endlagendämpfung sanft bis in seine Endlage, unabhängig davon, ob der Deckel durch ein mobiles Kommunikationsgerät beladen ist oder nicht.

Der Deckel kann einen zweiten Öffnungswinkel ≥ 90° aufweisen der durch einen Endanschlag begrenzt ist.

Der zweite Öffnungswinkel kann 90° bis 95° betragen. Hierbei ist von Vorteil, dass die Öffnung des nach oben offenen Behälters bei offenem Deckel vollständig freigegeben ist. Insbesondere für professionelle Anwendungen ist das von hervorzuhebendem Vorteil.

Der Endanschlag kann in zumindest einer seitlichen Deckelflanke des äußeren Deckels angeordnet sein. Eines separat herzustellenden und zu montierenden Bauteils für den Endanschlag bedarf es daher nicht.

Der Endanschlag kann durch einen Formschluss gebildet sein. Eine solche Ausgestaltung ist einfach und kostengünstig herstellbar und funktioniert während einer langen Gebrauchsdauer wartungsfrei.

Der äußere Deckel kann ein erstes Schloss zur Arretierung des Deckels in seiner Geschlossen-Stellung und/oder der innere Deckel ein zweites Schloss zur Arretierung des inneren Deckels im äußeren Deckel umfassen.

Durch das erste Schloss im äußeren Deckel ist der Deckel in seiner Geschlossen-Stellung auf dem Behälter arretiert. Außerdem ist sichergestellt, dass der Zwischenraum zwischen dem inneren und dem äußeren Deckel nicht unerlaubt geöffnet werden kann, auch wenn der gesamte Deckel in Offen-Stellung ist. Der Inhalt, der sich im Zwischenraum befindet, ist deshalb vor einem unerwünschten Zugriff von außen geschützt.

Selbst dann, wenn der Deckel in Offen-Stellung ist, muss das zweite Schloss geöffnet werden, um Zugang zum Zwischenraum zu erhalten.

Gemäß einer vorteilhaften Ausgestaltung kann es vorgesehen sein, dass das zweite Schloss dem ersten Schloss in einer funktionstechnischen Reihenschaltung nachgeschaltet ist. Um bei einer derartigen Ausgestaltung Zugang zum Zwischenraum und dem darin befindlichen Inhalt, insbesondere dem mobilen Kommunikationsgerät zu erhalten, muss zunächst das erste Schloss geöffnet werden, um den Deckel bezogen auf den Behälter, der durch ihn verschlossen ist, in Offen-Stellung zu überführen. Anschließend, wenn der Deckel offen ist, muss das zweite Schloss entriegelt werden, um den inneren und äußeren Deckel voneinander wegklappen zu können. Erst dann ist der Zwischenraum, in dem sich die Kommunikationsgeräte-Halterung befindet, zugänglich. Teure Kommunikationsgeräte, wie zum Beispiel Tablet-Computer und/oder vertrauliche Daten, die sich darauf befinden, sind dadurch besonders sicher vor einem unerlaubten Zugriff geschützt.

Eine vereinfachte Handhabung kann sich für den Benutzer des Reinigungsfahrwagens dadurch ergeben, dass der äußere Deckel bevorzugt eine erste Entriegelungseinrichtung umfasst, nach deren Betätigung der Deckel aus seiner Geschlossen-Stellung mittels des Feder-Dämpfer-Systems federkraftbeaufschlagt und selbsttätig bis zum Endanschlag in Offen-Stellung bewegt wird. Hierbei ist von Vorteil, dass der Benutzer die Entriegelungseinrichtung durch seine Ellenbogen betätigen kann. Nach Betätigung der Entriegelungseinrichtung schwingt der Deckel selbsttätig in Offen-Stellung und gibt die Öffnung des Behälters vollständig frei. Zur Betätigung der Entriegelungseinrichtung ist es nicht unbedingt erforderlich, dass der Benutzer des Reinigungsfahrwagens seine Hände frei hat. Dadurch ist die Bedienung des Reinigungsfahrwagens vereinfacht.

Der äußere oder der innere Deckel können eine zweite

Entriegelungseinrichtung umfassen, nach deren Betätigung der Zwischenraum zwischen äußerem Deckel und innerem Deckel in Offen-Stellung bringbar ist. Wie zuvor beschrieben, kann auch diese zweite Entriegelungseinrichtung durch die Ellenbogen des Benutzers entriegelt werden.

Zum Öffnen des Zwischenraums kann der Benutzer mit seinen Fingern einen Schnapphaken lösen, der die beiden Deckel miteinander verbindet.

Die erste Entriegelungseinrichtung kann als federbeaufschlagter Schnappriegel ausgebildet sein, der durch einfaches Drücken entriegelt wird und bei Überführen des Deckels in die Geschlossen-Stellung von selbst verriegelt.

Die Kommunikationsgeräte-Halterung kann kraft- und/oder formschlüssig mit der ersten Schale oder mit der zweiten Schale verbunden sein. So besteht zum Beispiel die Möglichkeit, dass die Kommunikationsgeräte-Halterung durch Gummibänder gebildet ist, mittels derer das mobile Kommunikationsgerät auf der Innenseite der ersten Schale gehalten ist.

Nach einer Ausgestaltung kann es vorgesehen sein, dass der Tragkörper und die Kommunikationsgeräte-Halterung oder die zweite Schale und die Kommunikationsgeräte-Halterung jeweils einstückig ineinander übergehend und materialeinheitlich ausgebildet sind. Dadurch weist der Reinigungsfahrwagen einen teilearmen Aufbau auf.

Nach einer anderen Ausgestaltung kann die Kommunikationsgeräte-Halterung als separates Bauteil ausgebildet sein.

Die Kommunikationsgeräte-Halterung kann auf der der ersten Schale zugewandten Seite der zweiten Schale angeordnet sein. Die Kommunikationsgeräte-Halterung kann zum Beispiel eine schalenförmige Vertiefung umfassen, die an die Form des aufzunehmenden mobilen Kommunikationsgeräts angepasst ist.

Die zweite Schale kann eine Durchbrechung oder Vertiefung aufweisen, in der die Kommunikationsgeräte-Halterung angeordnet ist. Die Kommunikationsgeräte-Halterung ist dadurch stets in derselben Position und für den Benutzer einfach bedienenbar mit der zweiten Schale verbunden.

Die Kommunikationsgeräte-Halterung kann einen Adapter zur Aufnahme unterschiedlicher Kommunikationsgeräte umfassen.

Die Kommunikationsgeräte-Halterung kann dabei beispielsweise an einen zur Anwendung gelangenden Tablet-Computer angepasst sein oder an ein Smartphone.

Die Kommunikationsgeräte-Halterung ist bevorzugt im Wesentlichen oberflächenbündig in der Durchbrechung oder Vertiefung der zweiten Schale angeordnet. Hierbei ist von Vorteil, dass es innerhalb des Zwischenraums keine scharfkantigen Absätze oder Vorsprünge gibt und der Benutzer des Reinigungsfahrwagens das zur Anwendung gelangende mobile Kommunikationsgerät besonders einfach und sicher in der Kommunikationsgeräte-Halterung ablegen oder aus der Kommunikationsgeräte-Halterung entnehmen kann. Außerdem lässt sich durch die oberflächenbündige Anordnung der Kommunikationsgeräte-Halterung der Zwischenraum einfach und gründlich reinigen.

Die erste Schale kann ein transparentes Sichtfeld aufweisen, das im Wesentlichen deckungsgleich mit der Kommunikationsgeräte-Halterung ausgebildet ist. Das mobile Kommunikationsgerät ist während seiner bestimmungsgemäßen Verwendung von außen durch das Sichtfeld hindurch sichtbar.

Das transparente Sichtfeld kann bedarfsweise getönt sein kann. Ist zum Beispiel ein mobiles Kommunikationsgerät in der Kommunikationsgeräte-Halterung des Reinigungsfahrwagens angeordnet, jedoch nicht eingeschaltet, ist das mobile Kommunikationsgerät durch das getönte transparente Sichtfeld hindurch nicht zu erkennen. Dadurch ist das im Zwischenraum angeordnete mobile Kommunikationsgerät besser vor unerlaubtem Zugriff oder Diebstahl geschützt.

Erst dann, wenn der Reinigungsfahrwagen benutzt wird, wird das mobile Kommunikationsgerät in der Kommunikationsgeräte-Halterung eingeschaltet und ist durch das transparente Sichtfeld hindurch zu sehen und/oder zu bedienen.

Das Sichtfeld ist bevorzugt unlösbar in der ersten Schale angeordnet. Hierbei ist von Vorteil, dass der Zwischenraum durch das Sichtfeld hindurch nicht zugänglich ist. Auch dadurch ist der unerlaubte Zugang zum Kommunikationsgerät erschwert. Der Zwischenraum und das in der Kommunikationsgeräte-Halterung aufgenommene mobile Kommunikationsgerät sind nur dann zugänglich, wenn die erste und die zweite Schale um das Gelenk voneinander weggeklappt sind.

Nach einer anderen Ausgestaltung kann es vorgesehen sein, dass das Sichtfeld kraft- und/oder formschlüssig sowie zerstörungsfrei lösbar in der ersten Schale angeordnet ist. Ein mobiles Kommunikationsgerät kann derart in die Kommunikationsgeräte-Halterung montiert werden, dass das transparente Sichtfeld aus der ersten Schale zunächst entfernt wird, das mobile Kommunikationsgerät anschließend durch die entstandene Öffnung in die Kommunikationsgeräte-Halterung eingesetzt wird und dann das Sichtfeld in die erste Schale wieder montiert wird, um den Zwischenraum zu verschließen und das mobile Kommunikationsgerät vor äußeren Einflüssen zu schützen. Ein Öffnen des Zwischenraums zum Ablegen des mobilen Kommunikationsgeräts in der Kommunikationsgeräte-Halterung ist in einem solchen Fall nicht erforderlich.

Das Sichtfeld kann durch eine Einrastvorrichtung mit der ersten Schale verbunden sein.

Das Sichtfeld kann als berührungsempfindliches Bedienfeld zur Bedienung des in der Kommunikationsgeräte-Halterung angeordneten mobilen Kommunikationsgeräts ausgebildet sein. Die Handhabung des mobilen Kommunikationsgeräts ist dadurch größtmöglich vereinfacht. Der Benutzer des Reinigungsfahrwagens kann das mobile Kommunikationsgerät auch mit feuchten und/oder verunreinigten Fingern bedienen, ohne das es Schaden nimmt. Eine direkte Berührung des mobilen Kommunikationsgeräts durch den Benutzer wird durch das berührungsempfindliche Bedienfeld verhindert.

Die zweite Schale kann benachbart zur Kommunikationsgeräte-Halterung zumindest eine Ablagefläche zur Ablage zumindest eines Peripheriegeräts des Kommunikationsgeräts aufweisen. Hierbei ist von Vorteil, dass der Reinigungsfahrwagen auch während einer langen Gebrauchsdauer weitgehend autark betrieben werden kann.

Ein Peripheriegerät kann zum Beispiel ein Powerpack für das mobile Kommunikationsgerät sein, um auch dann dessen Funktion sicherzustellen, wenn es häufig und/oder während einer langen Zeit benutzt wird, zum Beispiel ständig online ist.

Die Ablagefläche kann zumindest eine Peripheriegeräte-Halterung zur Aufnahme des Peripheriegeräts aufweisen. In dieser Peripheriegeräte-Halterung kann das Peripheriegerät entsprechend dem Kommunikationsgerät in der Kommunikationsgeräte-Halterung aufgenommen sein. Kommunikationsgerät und Peripheriegerät können in den entsprechenden Halterungen kraft- und/oder formschlüssig aufgenommen sein. Ein unerwünschtes Verrutschen des mobilen Kommunikationsgeräts und des Peripheriegeräts in der jeweiligen Halterung wird dadurch verhindert.

Die zweite Schale kann, benachbart zur Kommunikationsgeräte-Halterung, zumindest eine Ablagefläche für weitere Gegenstände aufweisen. Diese Ablagefläche kann zum Beispiel genutzt werden, um Stift und Zettel darauf abzulegen. Auch andere Gegenstände, die der Benutzer des Reinigungsfahrwagens mitführen möchte, ohne sie am Körper zu tragen, können darauf abgelegt werden und sind, ebenso wie Kommunikationsgerät und/oder Peripheriegerät, verliersicher im Zwischenraum angeordnet.

Der Reinigungsfahrwagen kann einen nach oben offenen Behälter und einen Deckel, jeweils wie zuvor beschrieben, umfassen, wobei der Deckel mittels eines Rahmens mit dem nach oben offenen Behälter verbindbar ist.

Der Rahmen und der Deckel können eine vormontierbare Einheit bilden. Hierbei ist von Vorteil, dass die vormontierbare Einheit als ganzes auf den nach oben offenen Behälter aufgesetzt und mit diesem verbunden werden kann. Die vormontierbare Einheit ist hinsichtlich Abmessungen und Gewicht besonders handlich. Der Benutzer des Reinigungsfahrwagens kann die vormontierbare Einheit im Anschluss an seine Tätigkeit vom Behälter entfernen und zum Beispiel zur Auswertung in eine Reinigungszentrale mitnehmen. In der Reinigungszentrale kann das mobile Kommunikationsgerät ausgelesen und gegebenenfalls für den nächsten Einsatz vorbereitet werden.

Alternativ kann der Rahmen zusammen mit dem Deckel einmal eingesetzt werden und rastet über Schnapphaken mit dem oberen Rahmen des Reinigungsfahrwagens ein. Das Lösen des Deckel-Rahmens erfolgt dann durch Entriegeln der Schnapphaken, zum Beispiel vier oder sechs Stück, die am Umfang angeordnet sind.

Der Rahmen und der Deckel können mittels des Feder-Dämpfer-Systems miteinander verbunden sein. Die Handhabung wird dadurch, wie zuvor bereits beschrieben, vereinfacht.

Der Rahmen kann außenumfangsseitig Funktionselemente aufweisen, die zum Beispiel bevorzugt durch Halteklemmen oder Haken für Reinigungsgeräte gebildet sind.

### Kurzbeschreibung der Zeichnung

Ein Ausführungsbeispiel des erfindungsgemäßen Reinigungsfahrwagens wird nachfolgend anhand der Figuren 1 bis 4 näher erläutert.

Diese zeigen jeweils in schematischer Darstellung:
Figur 1 ein Ausführungsbeispiel eines erfindungsgemäßen Reinigungsfahrwagens in einer perspektivischen Draufsicht,
Figur 2 den Reinigungsfahrwagen aus Figur 1 mit zugänglichem Zwischenraum, in dem eine Kommunikationsgeräte-Halterung mit mobilem Kommunikationsgerät angeordnet ist,
Figur 3 den Reinigungsfahrwagen aus Figur 2 mit vollständig aufgeklapptem Deckel und frei zugänglichem, nach oben offenem Behälter,
Figur 4 ein Detail des Reinigungsfahrwagens aus Figur 1, das den Endanschlag des Deckels zeigt.

### Ausführung der Erfindung

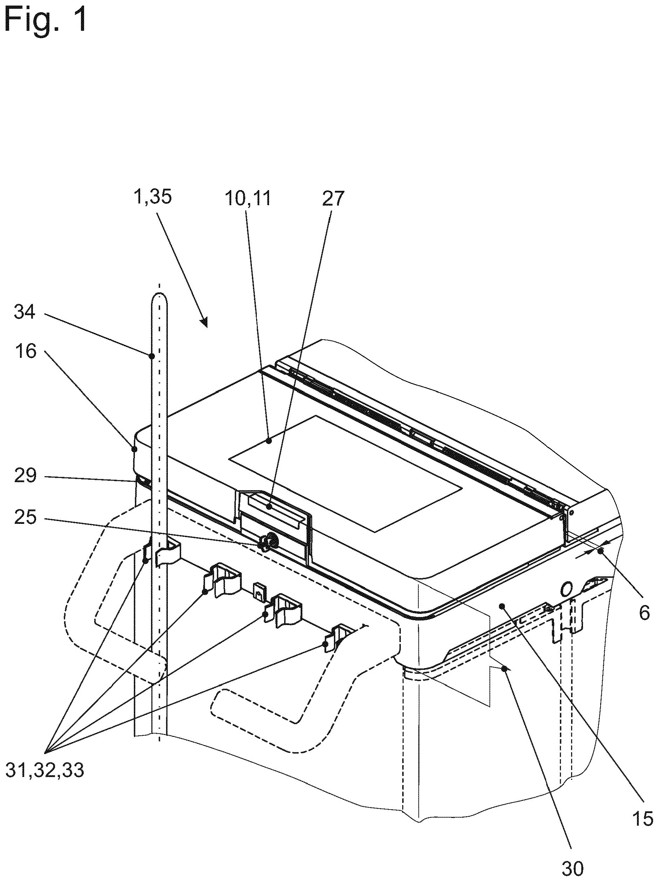

In den Figuren 1 bis 4 ist ein Ausführungsbeispiel des erfindungsgemäßen Reinigungsfahrwagens gezeigt.

Der Tragkörper 1 mit seiner äußeren ersten Schale 4 und seiner inneren zweiten Schale 5 wird in dem gezeigten Ausführungsbeispiel durch einen Deckel 35 für einen nach oben offenen Behälter 15 gebildet, wobei die erste Schale 4 als äußerer Deckel 16 ausgebildet ist. Die zweite Schale 5 ist als innerer Deckel 17ausgebildet.

Außerdem umfasst der Reinigungsfahrwagen eine Kommunikationsgeräte-Halterung 2 zur Aufnahme eines mobilen Kommunikationsgeräts 3, das in dem gezeigten Ausführungsbeispiel durch einen Tablet-Computer gebildet ist, wobei das mobile Kommunikationsgerät 3 in der Kommunikationsgeräte-Halterung 2 verliersicher angeordnet ist.

Der äußere Deckel 16 und der innere Deckel 17 begrenzen einen Zwischenraum 6, in dem die Kommunikationsgeräte-Halterung 2 und das Kommunikationsgerät 3 angeordnet sind. Der Zwischenraum 6 wird dadurch zugänglich, dass der äußere Deckel 16 und der innere Deckel 17 um das Gelenk 7 voneinander wegklappbar sind.

In Figur 1 ist eine Draufsicht auf den Reinigungsfahrwagen in perspektivischer Darstellung gezeigt. Der Deckel 35, der den äußeren Deckel 16 und den inneren Deckel 17 umfasst, ist an dem Rahmen 29 befestigt, der auf dem nach oben offenen Behälter 15 angeordnet und arretiert ist.

Der äußere Deckel 16 umfasst ein transparentes Sichtfeld 10, das als berührempfindliches Bedienfeld 11 zur Bedienung des in der Kommunikationsgeräte-Halterung 2 angeordneten und hier nicht sichtbaren Kommunikationsgeräts 3 ausgebildet ist. Das transparente Sichtfeld 10 kann zum Beispiel derart getönt sein, dass das nicht im Betrieb befindliche mobile Kommunikationsgerät unter dem transparenten Sichtfeld 10 im Wesentlichen unsichtbar ist. Dadurch ist das Kommunikationsgerät 3 besser vor Diebstahl geschützt.

Das berührempfindliche Bedienfeld 11 berührt das Display des mobilen Kommunikationsgeräts unmittelbar anliegend. Obwohl der Benutzer nicht direkt auf das Display des mobilen Kommunikationsgeräts zugreift, ist dessen Betätigung mittels des berührempfindlichen Bedienfelds 11 problemlos möglich.

Der äußere Deckel 16 ist mit dem ersten Schloss 25 versehen, zur Arretierung des Deckels 35 in der hier gezeigten Geschlossen-Stellung.

Außerdem ist ein zweites Schloss 26 zwischen innerem Deckel 17 und äußerem Deckel 16 vorgesehen.

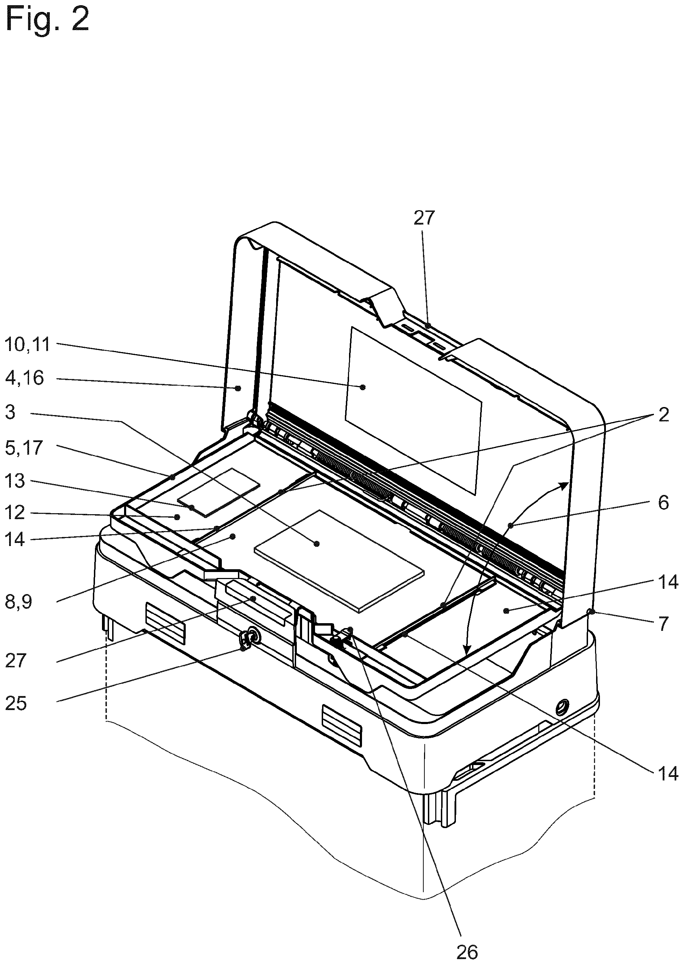

In Figur 2 sind der äußere Deckel 16 und der innere Deckel 17 um das Gelenk 7 voneinander weggeschwenkt, und der Zwischenraum 6 ist frei zugänglich. In Figur 2 ist zu erkennen, dass die Kommunikationsgeräte-Halterung 2 in einer Vertiefung 9 des inneren Deckels 17 oberflächenbündig angeordnet ist. Links und rechts der Kommunikationsgeräte-Halterung 2, bei geschlossenem Zwischenraum nicht mehr vom Sichtfeld 10 überdeckt, sind weitere Ablageflächen 12 zum Beispiel zur Ablage von Peripheriegeräten 13 des Kommunikationsgeräts 3 vorgesehen. Auch die Peripheriegeräte 13 sind in entsprechenden Halterungen 14 angeordnet. Sowohl das Kommunikationsgerät 3 als auch die Peripheriegeräte 13 sind dadurch rutschsicher innerhalb des Zwischenraums 6 angeordnet.

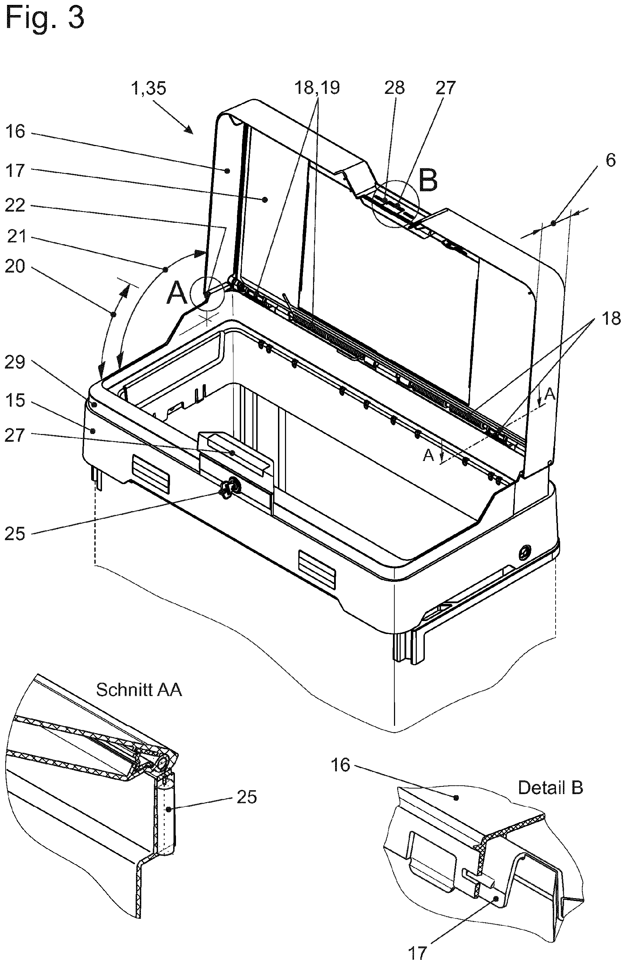

In Figur 3 ist der Reinigungsfahrwagen aus Figur 2 gezeigt, wobei jedoch der äußere Deckel 16 und der innere Deckel 17 durch das zweite Schloss 26 aneinander festgelegt sind und der Zwischenraum 6 dadurch verschlossen ist.

Geöffnet ist demgegenüber das erste Schloss 25, sodass der Deckel 35 insgesamt in Offen-Stellung ist. Der nach oben offene Behälter 15 ist dadurch frei zugänglich.

Gehalten wird der Deckel 35 in seiner Offen-Stellung durch das Feder-Dämpfer-System 18, das die Endlagendämpfung 19 umfasst. Die Endlagendämpfung 19 setzt in dem hier gezeigten Ausführungsbeispiel ab einem ersten Öffnungswinkel 20 von 45° ein, unabhängig davon, ob der Deckel 35 mit einem mobilen Kommunikationsgerät 3 bestückt ist oder nicht.

Ab dem ersten Öffnungswinkel 20 fährt der Deckel 35 gedämpft in seine Endlage, wobei die Endlage durch einen Endanschlag 22 begrenzt ist. Im gezeigten Ausführungsbeispiel bildet der in der Endlage befindliche Deckel 35 einen zweiten Öffnungswinkel 21 zwischen der Geschlossen-Stellung, die in Figur 1 gezeigt ist und der Offen-Stellung, die in Figur 3 gezeigt ist, der etwas mehr als 90° beträgt.

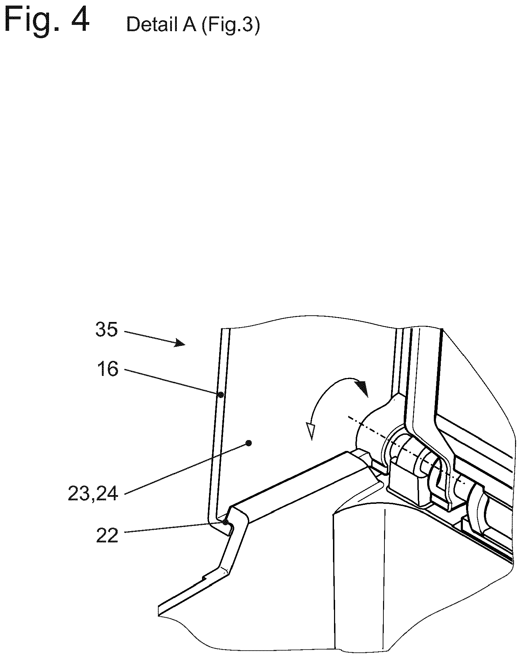

In Figur 4 ist ein Ausschnitt aus einer der seitlichen Deckelflanken 23, 24 von Figur 1 gezeigt. In zumindest einer seitlichen Deckelflanke 23, 24 des äußeren Deckels 16 ist der in Figur 4 gezeigte Endanschlag 22 integriert. In Offen-Stellung, wie in Figur 3 gezeigt, ist der offene Deckel 35 durch das Feder-Dämpfer-System 18 unter elastischer Vorspannung formschlüssig am Endanschlag 22 gehalten.

Der äußere Deckel 16 umfasst die erste Entriegelungsvorrichtung 27, nach deren Betätigung der Deckel 35 aus seiner Geschlossen-Stellung mittels des Feder-Dämpfer-Systems 18 federkraftbeaufschlagt und selbsttätig bis zum Endanschlag 22 in Offen-Stellung fährt. Der Zwischenraum 6 kann demgegenüber durch die zweite Entriegelungseinrichtung 28 geöffnet oder verschlossen werden, wobei die zweite Entriegelungsvorrichtung 28 einen Bestandteil des äußeren 16 oder inneren Deckels 17 bildet.

Beide Entriegelungseinrichtungen 27, 28 sollten für den Benutzer möglichst einfach zu betätigen sein. Zum Beispiel kann das dadurch geschehen, dass zumindest eine der Entriegelungseinrichtungen 27, 28 als federbeaufschlagter Schnapp-Riegel ausgebildet ist, der durch einfaches Drücken entriegelt wird. Diese Entriegelung kann beispielsweise schnell und einfach dadurch erfolgen, dass der Benutzer den Schnappriegel mit seinem Ellenbogen betätigt.

Soll der Deckel demgegenüber geschlossen werden, wird er vom Benutzer in Geschlossen-Stellung gedrückt. Der federbeaufschlagte Schnappriegel verschließt den Deckel dann selbsttätig auf dem nach oben offenen Behälter.

Bei dem gezeigten Reinigungsfahrwagen bilden der Rahmen 29 und der Deckel 35 die vormontierbare Einheit 30. Diese Einheit 30 kann als Ganzes auf den nach oben offenen Behälter 15 aufgesetzt und mit diesem verriegelt werden.

Beispielhaft ist der Behälter 35 außenumfangsseitig mit Funktionselementen 31 versehen, die in dem hier gezeigten Ausführungsbeispiel durch Halteklemmen 32 oder Haken 33 gebildet sind. Dadurch können zum Beispiel Reinigungsgeräte 34 am Reinigungsfahrwagen aufgenommen werden.

Der digitalisierte Reinigungsfahrwagen kann benutzt werden, um die Reinigungsqualität zu überwachen, ein Logbuch oder Checklisten elektronisch zu führen, Formulare und Berichte auszufüllen oder zu erstellen, Reinigungspläne elektronisch zu erstellen und/oder zu verwalten, eine Erledigung der Reinigung elektronisch mitzuteilen und/oder den Standort, an dem sich der Reinigungsfahrwagen befindet, an eine Reinigungszentrale zu übermitteln.

## Patentansprüche

1. Reinigungsfahrwagen, umfassend einen Tragkörper (1) und eine Kommunikationsgeräte-Halterung (2) zur Aufnahme eines mobilen Kommunikationsgeräts (3), wobei die Kommunikationsgeräte-Halterung (2) am Tragkörper (1) festgelegt ist, wobei der Tragkörper (1) zweischalig ausgebildet ist, umfassend eine äußere erste Schale (4) und eine innere zweite Schale (5), wobei die erste Schale (4) die zweite Schale (5) im Wesentlichen kuppelförmig überdeckt, wobei die erste Schale (4) und die zweite Schale (5) einen Zwischenraum (6) begrenzen, wobei die Kommunikationsgeräte-Halterung (2) im Zwischenraum (6) angeordnet ist und wobei die erste (4) und die zweite Schale (5) zur Öffnung des Zwischenraums (6) mittels eines Gelenks (7) voneinander wegklappbar sind, **dadurch gekennzeichnet, dass** der Tragkörper (1) als Deckel (35) für einen nach oben offenen Behälter (15) ausgebildet ist, die erste Schale (4) als äußerer Deckel (16) und die zweite Schale (5) als innerer Deckel (17).

2. Reinigungsfahrwagen nach Anspruch 1, **dadurch gekennzeichnet, dass** der Deckel (35) mittels eines Feder-Dämpfer-Systems (18) bedarfsweise in Offen- oder Geschlossen-Stellung bringbar ist.

3. Reinigungsfahrwagen nach Anspruch 2, **dadurch gekennzeichnet, dass** das Feder-Dämpfer-System (18) eine Endlagendämpfung (19) umfasst.

4. Reinigungsfahrwagen nach Anspruch 3, **dadurch gekennzeichnet, dass** die Endlagendämpfung (19) ab einem ersten Öffnungswinkel (20) des Deckels (35) ≥ 45° einsetzt.

5. Reinigungsfahrwagen nach einem der Ansprüche 1 bis 4, **dadurch gekennzeichnet, dass** der Deckel (35) einen zweiten Öffnungswinkel (21) ≥ 90° aufweist, der durch einen Endanschlag (22) begrenzt ist.

6. Reinigungsfahrwagen nach Anspruch 5, **dadurch gekennzeichnet, dass** der zweite Öffnungswinkel (21) 90° bis 95° beträgt.

7. Reinigungsfahrwagen nach einem der Ansprüche 5 oder 6, **dadurch gekennzeichnet, dass** der Endanschlag (22) in zumindest einer seitlichen Deckelflanke (23, 24) des äußeren Deckels (16) angeordnet ist.

8. Reinigungsfahrwagen nach einem der Ansprüche 5 bis 7, **dadurch gekennzeichnet, dass** der Endanschlag (22) durch einen Formschluss gebildet ist.

9. Reinigungsfahrwagen nach einem der Ansprüche 1 bis 8, **dadurch gekennzeichnet, dass** der äußere Deckel (16) ein erstes Schloss (25) zur Arretierung des Deckels (35) in seiner Geschlossenstellung und/oder der innere Deckel (17) ein zweites Schloss (26) zur Arretierung des inneren Deckels (17) im äußeren Deckel (16) umfasst.

10. Reinigungsfahrwagen nach Anspruch 9, **dadurch gekennzeichnet, dass** das zweite Schloss (26) dem ersten Schloss (25) in einer funktionstechnischer Reihenschaltung nachgeschaltet ist.

11. Reinigungsfahrwagen nach einem der Ansprüche 1 bis 10, **dadurch gekennzeichnet, dass** der äußere Deckel (16) eine erste Entriegelungseinrichtung (27) umfasst, nach deren Betätigung der Deckel (35) aus seiner Geschlossenstellung mittels des Feder-Dämpfer-Systems (18) federkraftbeaufschlagt und selbsttätig bis zum Endanschlag (22) in Offen-Stellung bringbar ist.

12. Reinigungsfahrwagen nach einem der Ansprüche 1 bis 11, **dadurch gekennzeichnet, dass** der äußere (16) oder innere Deckel (17) eine zweite Entriegelungseinrichtung (28) umfasst, nach deren Betätigung der Zwischenraum (6) zwischen äußerem Deckel (16) und innerem Deckel (17) in Offen-Stellung bringbar ist.

13. Reinigungsfahrwagen nach einem der Ansprüche 11 oder 12,
**dadurch gekennzeichnet, dass** die erste Entriegelungseinrichtung (27) als federbeaufschlagter Schnapp-Riegel ausgebildet ist, der durch einfaches Drücken entriegelt wird und bei Überführen des Deckels (35) in die Geschlossen-Stellung von selbst verriegelt.

14. Reinigungsfahrwagen nach einem der Ansprüche 1 oder 13, **dadurch gekennzeichnet, dass** die Kommunikationsgeräte-Halterung (2) kraft- und/oder formschlüssig mit der ersten Schale (4) oder mit der zweiten Schale (5) verbunden ist.

15. Reinigungsfahrwagen nach einem der Ansprüche 1 bis 13, **dadurch gekennzeichnet, dass** der Tragkörper (1) und die Kommunikationsgeräte-Halterung (2) oder die zweite Schale (5) und die Kommunikationsgeräte-Halterung (2) jeweils einstückig ineinander übergehend und materialeinheitlich ausgebildet sind.

16. Reinigungsfahrwagen nach einem der Ansprüche 1 bis 15, **dadurch gekennzeichnet, dass** die Kommunikationsgeräte-Halterung (2) auf der der ersten Schale (4) zugewandten Seite der zweiten Schale (5) angeordnet ist.

17. Reinigungsfahrwagen nach einem der Ansprüche 1 bis 16, **dadurch gekennzeichnet, dass** die zweite Schale (5) eine Durchbrechung (8) oder Vertiefung (9) aufweist, in der die Kommunikationsgeräte-Halterung (2) angeordnet ist.

18. Reinigungsfahrwagen nach Anspruch 17, **dadurch gekennzeichnet, dass** die Kommunikationsgeräte-Halterung (2) im Wesentlichen oberflächenbündig in der Durchbrechung (8) oder Vertiefung (9) angeordnet ist.

19. Reinigungsfahrwagen nach einem der Ansprüche 1 bis 18, **dadurch gekennzeichnet, dass** die erste Schale (4) ein transparentes Sichtfeld (10) aufweist, das im Wesentlichen deckungsgleich mit der Kommunikationsgeräte-Halterung (2) ausgebildet ist.

20. Reinigungsfahrwagen nach Anspruch 19, **dadurch gekennzeichnet, dass** das Sichtfeld (10) unlösbar in der ersten Schale (4) angeordnet ist.

21. Reinigungsfahrwagen nach Anspruch 19, **dadurch gekennzeichnet, dass** das Sichtfeld (10) kraft- und/oder formschlüssig sowie zerstörungsfrei lösbar in der ersten Schale (4) angeordnet ist.

22. Reinigungsfahrwagen nach Anspruch 21, **dadurch gekennzeichnet, dass** das Sichtfeld (10) durch eine Einrastvorrichtung mit der ersten Schale (4) verbunden ist.

23. Reinigungsfahrwagen nach einem der Ansprüche 19 bis 22, **dadurch gekennzeichnet, dass** das Sichtfeld (10) als berührungsempfindliches Bedienfeld (11) zur Bedienung des in der Kommunikationsgeräte-Halterung (2) angeordneten Kommunikationsgeräts (3) ausgebildet ist.

24. Reinigungsfahrwagen nach einem der Ansprüche 1 bis 21, **dadurch gekennzeichnet, dass** die zweite Schale (5) benachbart zur Kommunikationsgeräte-Halterung (2) zumindest eine Ablagefläche (12) zur Ablage zumindest eines Peripheriegeräts (13) des Kommunikationsgeräts (3) aufweist.

25. Reinigungsfahrwagen nach Anspruch 22, **dadurch gekennzeichnet, dass** die Ablagefläche (12) zumindest eine Peripheriegeräte-Halterung (14) zur Aufnahme des Peripheriegeräts (13) aufweist.

26. Reinigungsfahrwagen nach einem der Ansprüche 1 bis 25, **dadurch gekennzeichnet, dass** die zweite Schale (5) benachbart zur Kommunikationsgeräte-Halterung (2) zumindest eine Ablagefläche (12) zur Ablage weiterer Gegenstände aufweist.

27. Reinigungsfahrwagen, nach einem der Ansprüche 1-26, umfassend einen nach oben offenen Behälter (15) und einen Deckel (35), **dadurch gekennzeichnet, dass** der Deckel (35) mittels eines Rahmens (29) mit dem nach oben offenen Behälter (15) verbindbar ist.

28. Reinigungsfahrwagen nach Anspruch 27, **dadurch gekennzeichnet, dass** der Rahmen (29) und der Deckel (35) eine vormontierbare Einheit (30) bilden.

29. Reinigungsfahrwagen nach einem der Ansprüche 27oder 28, **dadurch gekennzeichnet, dass** der Rahmen (29) und der Deckel (35) mittels des Feder-Dämpfer-Systems (18) miteinander verbunden sind.

30. Reinigungsfahrwagen nach einem der Ansprüche 27bis 29, **dadurch gekennzeichnet, dass** der Rahmen (29) außenumfangsseitig Funktionselemente (31) aufweist.

31. Reinigungsfahrwagen nach Anspruch 30, **dadurch gekennzeichnet, dass** die Funktionselemente (31) durch Halteklemmen (32) oder Haken (33) für Reinigungsgeräte (34) gebildet sind.

## Claims

1. Cleaning cart comprising a support body (1) and a communications device holder (2) for receiving a mobile communications device (3), wherein the communications device holder (2) is fixed to the support body (1), wherein the support body (1) has a two-shell design comprising a first outer shell (4) and a second inner shell (5), wherein the first shell (4) covers the second shell (5) in a substantially dome-shaped manner, wherein the first shell (4) and the second shell (5) delimit an intermediate space (6), wherein the communications device holder (2) is arranged in the intermediate space (6), and wherein the first (4) and the second shell (5) can be folded away from one another by means of a hinge (7) in order to open up the intermediate space (6), **characterized in that** the support body (1) is configured as a cover (35) for an upwardly open container (15), the first shell (4) being the outer cover (16) and the second shell (5) the inner cover (17).

2. Cleaning cart according to Claim 1, **characterized in that** the cover (35) can be moved into the open or closed position, where necessary, by means of a spring-damper system (18).

3. Cleaning cart according to Claim 2, **characterized in that** the spring-damper system (18) comprises end-position damping (19).

4. Cleaning cart according to Claim 3, **characterized in that** the end position damping (19) starts from a first opening angle (20) of the cover (35) ≥ 45°.

5. Cleaning cart according to one of Claims 1 to 4, **characterized in that** the cover (35) has a second opening angle (21) ≥ 90° which is delimited by a limit stop (22).

6. Cleaning cart according to Claim 5, **characterized in that** the second opening angle (21) is 90° to 95°.

7. Cleaning cart according to one of Claims 5 or 6, **characterized in that** the limit stop (22) is arranged in at least one lateral cover side (23, 24) of the outer cover (16).

8. Cleaning cart according to one of Claims 5 to 7, **characterized in that** the limit stop (22) is formed by a form fit.

9. Cleaning cart according to one of Claims 1 to 8, **characterized in that** the outer cover (16) comprises a first lock (25) for locking the cover (35) in its closed position and/or the inner cover (17) comprises a second lock (26) for locking the inner cover (17) in the outer cover (16).

10. Cleaning cart according to Claim 9, **characterized in that** the second lock (26) is arranged after the first lock (25) in a functional series connection.

11. Cleaning cart according to one of Claims 1 to 10, **characterized in that** the outer cover (16) comprises a first unlocking mechanism (27), following the actuation of which the cover (35) is automatically moved from its closed position as far as the limit stop (22) into its open position by means of the spring-damper system (18) when exposed to spring force.

12. Cleaning cart according to one of Claims 1 to 11, **characterized in that** the outer (16) or inner cover (17) comprises a second unlocking mechanism (28), following the actuation of which the intermediate space (6) between the outer cover (16) and the inner cover (17) can be moved into the open position.

13. Cleaning cart according to one of Claims 11 or 12, **characterized in that** the first unlocking mechanism (27) is configured as a spring-loaded snap-in latch which is unlocked simply by pressing and is automatically locked when the cover (35) is moved into the closed position.

14. Cleaning cart according to one of Claims 1 or 13, **characterized in that** the communications device holder (2) is connected to the first shell (4) or to the second shell (5) in a force-fitting and/or form-fitting manner.

15. Cleaning cart according to one of Claims 1 to 13, **characterized in that** the support body (1) and the communications device holder (2) or the second shell (5) and the communications device holder (2) are each formed integrally merging into one another and of uniform material.

16. Cleaning cart according to one of Claims 1 to 15, **characterized in that** the communications device holder (2) is arranged on the side of the second shell (5) facing the first shell (4).

17. Cleaning cart according to one of Claims 1 to 16, **characterized in that** the second shell (5) has an aperture (8) or a recess (9) in which the communications device holder (2) is arranged.

18. Cleaning cart according to Claim 17, **characterized in that** the communications device holder (2) is arranged in the aperture (8) or recess (9) in a substantially surface-flush manner.

19. Cleaning cart according to one of Claims 1 to 18, **characterized in that** the first shell (4) has a transparent viewing panel (10) which is substantially congruent with the communications device holder (2).

20. Cleaning cart according to Claim 19, **characterized in that** the viewing panel (10) is arranged in the first shell (4) in a non-detachable manner.

21. Cleaning cart according to Claim 19, **characterized in that** the viewing panel (10) is arranged in the first shell (4) in a force-fitting and/or form-fitting and non-destructively detachable manner.

22. Cleaning cart according to Claim 21, **characterized in that** the viewing panel (10) is connected to the first shell (4) by a latching device.

23. Cleaning cart according to one of Claims 19 to 22, **characterized in that** the viewing panel (10) is configured as a touch-sensitive operating panel (11) for operating the communications device (3) arranged in the communications device holder (2).

24. Cleaning cart according to one of Claims 1 to 21, **characterized in that** the second shell (5) has at least one storage area (12) for storing at least one peripheral unit (13) of the communications device (3) adjacent to the communications device holder (2).

25. Cleaning cart according to Claim 22, **characterized in that** the storage area (12) has at least one peripheral unit holder (14) for receiving the peripheral unit (13).

26. Cleaning cart according to one of Claims 1 to 25, **characterized in that** the second shell (5) has at least one storage area (12) for storing further objects adjacent to the communications device holder (2).

27. Cleaning cart according to one of Claims 1-26, comprising an upwardly open container (15) and a cover (35), **characterized in that** the cover (35) can be connected to the upwardly open container (15) by means of a frame (29).

28. Cleaning cart according to Claim 27, **characterized in that** the frame (29) and the cover (35) form a preassemblable unit (30).

29. Cleaning cart according to one of Claims 27 or 28, **characterized in that** the frame (29) and the cover (35) are connected to one another by means of the spring-damper system (18).

30. Cleaning cart according to one of Claims 27 to 29, **characterized in that** the frame (29) has functional elements (31) on the outer circumference.

31. Cleaning cart according to Claim 30, **characterized in that** the functional elements (31) are formed by holding clamps (32) or hooks (33) for cleaning utensils (34) .

## Revendications

1. Chariot de nettoyage, comprenant un corps de support (1) et un support d'appareil de communication (2) destiné à recevoir un appareil de communication mobile (3), le support d'appareil de communication (2) étant fixé au corps de support (1), le corps de support (1) étant conçu comme une double coque comprenant une première coque extérieure (4) et une deuxième coque intérieure (5), la première coque (4) recouvrant la deuxième coque (5) selon une forme sensiblement bombée, la première coque (4) et la deuxième coque (5) délimitant un espace intermédiaire (6), le support d'appareil de communication (2) étant disposé dans l'espace intermédiaire (6) et la première coque (4) et la deuxième coque (5) pouvant être écartées l'une de l'autre au moyen d'une articulation (7) afin d'ouvrir l'espace intermédiaire (6), **caractérisé en ce que** le corps de support (1) est conçu comme un couvercle (35) destiné à un récipient (15) ouvert vers le haut, la première coque (4) est conçue comme un couvercle extérieur (16) et la deuxième coque (5) est conçue comme un couvercle intérieur (17).

2. Chariot de nettoyage selon la revendication 1, **caractérisé en ce que** le couvercle (35) peut être amené en position ouverte ou fermée si nécessaire au moyen d'un système amortisseur à ressort (18).

3. Chariot de nettoyage selon la revendication 2, **caractérisé en ce que** le système amortisseur à ressort (18) comprend un amortissement en position finale (19).

4. Chariot de nettoyage selon la revendication 3, **caractérisé en ce que** l'amortissement en position finale (19) démarre à partir d'un premier angle d'ouverture (20) du couvercle (35) ≥ 45°.

5. Chariot de nettoyage selon l'une des revendications 1 à 4, **caractérisé en ce que** le couvercle (35) présente un deuxième angle d'ouverture (21) > 90° qui est limité par une butée d'extrémité (22) .

6. Chariot de nettoyage selon la revendication 5, **caractérisé en ce que** le deuxième angle d'ouverture (21) est de 90° à 95°.

7. Chariot de nettoyage selon l'une des revendications 5 ou 6, **caractérisé en ce que** la butée d'extrémité (22) est disposée dans au moins un flanc de couvercle latéral (23, 24) du couvercle extérieur (16).

8. Chariot de nettoyage selon l'une des revendications 5 à 7, **caractérisé en ce que** la butée d'extrémité (22) est formée par complémentarité de formes.

9. Chariot de nettoyage selon l'une des revendications 1 à 8, **caractérisé en ce que** le couvercle extérieur (16) comprend un premier verrou (25) destiné à bloquer le couvercle (35) dans sa position fermée et/ou le couvercle intérieur (17) comprend un deuxième verrou (26) destiné à bloquer le couvercle intérieur (17) dans le couvercle extérieur (16) .

10. Chariot de nettoyage selon la revendication 9, **caractérisé en ce que** le deuxième verrou (26) est monté en aval du premier verrou (25) suivant un montage en série fonctionnel.

11. Chariot de nettoyage selon l'une des revendications 1 à 10, **caractérisé en ce que** le couvercle extérieur (16) comprend un premier module de déverrouillage (27), après actionnement duquel le couvercle (35) est soumis à la force d'un ressort depuis sa position fermée au moyen du système amortisseur à ressort (18) et peut être amené automatiquement en position ouverte jusqu'à la butée d'extrémité (22).

12. Chariot de nettoyage selon l'une des revendications 1 à 11, **caractérisé en ce que** le couvercle extérieur (16) ou le couvercle intérieur (17) comprend un deuxième module de déverrouillage (28), après actionnement duquel l'espace intermédiaire (6) entre le couvercle extérieur (16) et le couvercle intérieur (17) peut être amené en position ouverte.

13. Chariot de nettoyage selon l'une des revendications 11 ou 12, **caractérisé en ce que** le premier module de déverrouillage (27) est conçu comme un loquet encliquetable à ressort qui est déverrouillé par simple pression et se verrouille de lui-même lorsque le couvercle (35) est déplacé en position fermée.

14. Chariot de nettoyage selon l'une des revendications 1 ou 13, **caractérisé en ce que** le support d'appareil de communication (2) est relié par complémentarité de formes et/ou en force à la première coque (4) ou à la deuxième coque (5).

15. Chariot de nettoyage selon l'une des revendications 1 à 13, **caractérisé en ce que** le corps de support (1) et le support d'appareil de communication (2) ou la deuxième coque (5) et le support d'appareil de communication (2) sont chacun conçus en une seule matière et de manière à se fondre l'une dans l'autre d'une seule pièce.

16. Chariot de nettoyage selon l'une des revendications 1 à 15, **caractérisé en ce que** le support d'appareil de communication (2) est disposé du côté de la deuxième coque (5) qui est dirigé vers la première coque (4).

17. Chariot de nettoyage selon l'une des revendications 1 à 16, **caractérisé en ce que** la deuxième coque (5) comporte un passage (8) ou évidement (9) dans lequel est disposé le support d'appareil de communication (2).

18. Chariot de nettoyage selon la revendication 17, **caractérisé en ce que** le support d'appareil de communication (2) est disposé sensiblement au ras de la surface dans le passage (8) ou l'évidement (9).

19. Chariot de nettoyage selon l'une des revendications 1 à 18, **caractérisé en ce que** la première coque (4) comporte un champ de vision transparent (10) qui est conçu pour être sensiblement congruent avec le support d'appareil de communication (2) .

20. Chariot de nettoyage selon la revendication 19, **caractérisé en ce que** le champ de vision (10) est disposé à demeure dans la première coque (4).

21. Chariot de nettoyage selon la revendication 19, **caractérisé en ce que** le champ de vision (10) est disposé dans la première coque (4) en force et/ou par complémentarité de formes et peut être libéré de manière non destructive.

22. Chariot de nettoyage selon la revendication 21, **caractérisé en ce que** le champ de vision (10) est relié à la première coque (4) par un dispositif à encliquetage .

23. Chariot de nettoyage selon l'une des revendications 19 à 22, **caractérisé en ce que** le champ de vision (10) est conçu comme un panneau de commande tactile (11) destiné à commander l'appareil de communication (3) disposé dans le support d'appareil de communication (2).

24. Chariot de nettoyage selon l'une des revendications 1 à 21, **caractérisé en ce que** la deuxième coque (5) comporte au moins une surface de réception (12) adjacente au support d'appareil de communication (2) et destinée à recevoir au moins un périphérique (13) de l'appareil de communication (3).

25. Chariot de nettoyage selon la revendication 22, **caractérisé en ce que** la surface de dépôt (12) comporte au moins un support de périphérique (14) destiné à recevoir le périphérique (13).

26. Chariot de nettoyage selon l'une des revendications 1 à 25, **caractérisé en ce que** la deuxième coque (5) comporte au moins une surface de dépôt (12) adjacente au support d'appareil de communication (2) et destinée au dépôt d'autres objets.

27. Chariot de nettoyage selon l'une des revendications 1 à 26, comprenant un récipient (15) ouvert vers le haut et un couvercle (35), **caractérisé en ce que** le couvercle (35) peut être relié au récipient (15) ouvert vers le haut au moyen d'un cadre (29) .

28. Chariot de nettoyage selon la revendication 27, **caractérisé en ce que** le cadre (29) et le couvercle (35) forment une unité pré-montée (30).

29. Chariot de nettoyage selon l'une des revendications 27 ou 28, **caractérisé en ce que** le cadre (29) et le couvercle (35) sont reliés l'un à l'autre au moyen du système amortisseur à ressort (18).

30. Chariot de nettoyage selon l'une des revendications 27 à 29, **caractérisé en ce que** le cadre (29) comporte des éléments fonctionnels (31) sur la circonférence extérieure.

31. Chariot de nettoyage selon la revendication 30, **caractérisé en ce que** les éléments fonctionnels (31) sont formés par des pinces de retenue (32) ou des crochets (33) destinés à des appareils de nettoyage (34) .
